Europäisches Patentamt

European Patent Office

Office européen des brevets

(11) Veröffentlichungsnummer: **0 492 534 A1**

# (12) EUROPÄISCHE PATENTANMELDUNG

(21) Anmeldenummer: **91122002.8**

(22) Anmeldetag: **20.12.91**

(51) Int. Cl.5: **B65D 83/06**, G01F 11/28

(30) Priorität: **22.12.90 DE 9017370 U**

(43) Veröffentlichungstag der Anmeldung:
**01.07.92 Patentblatt 92/27**

(84) Benannte Vertragsstaaten:
**AT BE CH DE DK ES FR GB GR IT LI LU NL SE**

(71) Anmelder: **EFFEM GmbH**
**Eitzer Landstrasse 215**
**W-2810 Verden/Aller(DE)**

(72) Erfinder: **Keller, Peter**
**Gubbenrather Strasse 30**
**W4053 Jüchen-Gierath(DE)**

(74) Vertreter: **Goddar, Heinz J., Dr. et al**
**FORRESTER & BOEHMERT**
**Franz-Joseph-Strasse 38**
**W-8000 München 40(DE)**

(54) **Spender mit einer Vorrats-, Portionierungs-, und Ausgabekammer.**

(57) Spender (1) für insbesondere pulverförmige bzw. körnige Massen, mit einer Vorratskammer (2), einer Portionierungskammer (3) und einer Ausgabekammer (4) mit einer Ausgabeöffnung (5), welche Ausgabekammer durch eine Zwischenwand (6) von der Portionierungskammer getrennt ist, wobei durch ein erstmaliges Umkippen die Masse in die Portionierungskammer gelangt und von dort beim Zurückkippen in die Ausgabekammer, und beim zweiten Umkippen die portionierte Masse ausgegeben wird, weiter mit einem Verschlußteil (8), das im Verschlußzustand sowohl eine Durchgangsöffnung von der Vorratskammer zu der Portionierungskammer als auch die Ausgabeöffnung verschließt, dadurch gekennzeichnet, daß die Zwischenwand feststehend ausgebildet ist und daß an dem Verschlußteil ein Sperrteil (10) ausgebildet ist, zur Sperrung der Durchgangsöffnng (9) von der Vorratskammer zu der Portionierungskammer in dem Verschlußzustand, welches Sperrteil im Zuge einer Schließbewegung des Verschlußteils durch eine Öffnung iener Decke der Portionierungskammer verschiebbar ist.

FIG.1

Die Erfindung betrifft einen Spender für insbesondere pulverförmige bzw. körnige Massen, mit einer Vorratskammer, einer Portionierungskammer und einer Ausgabekammer mit einer Ausgabeöffnung, welche Ausgabekammer durch eine Zwischenwand von der Portionierungskammer getrennt ist, wobei durch ein erstmaliges Umkippen die Masse in die Portionierungskammer gelangt und von dort beim Zurückkippen in die Ausgabekammer, und bei einem zweiten Umkippen die portionierte Masse ausgegeben wird, weiter mit einem Verschlußteil, das im Verschlußzustand sowohl eine Durchgangsöffnung von der Vorratskammer zu der Portionierungskammer als auch die Ausgabeöffnung verschließt.

Solche Spender sind bereits in verschiedenen Ausgestaltungen bekannt geworden. Hierzu wird bspw. auf die DE-OS 27 35 372 verwiesen. Die Spender dienen ganz allgemein dazu, jeweils zwangsläufig eine nur portionierte Ausgabe zu erreichen. Sie können sowohl für Massen als auch für Flüssigkeiten angewendet werden. Es ist allerdings kein kontinuierliches Ausgießen oder Ausschütten möglich, sondern immer nur eine Ausgabe aufgrund eines wechselweisen Umkippens.

Bei einem bekannten Spender aus der vorgenannten Druckschrift (vergl. Fig. 42) ist die Zwischenwand zwischen der Ausgabekammer und der Portionierungskammer an das Verschlußteil angeformt. Im Verschlußzustand liegt eine Stirnfläche der Zwischenwand an einer Trennwand zwischen der Portionierungskammer und der Vorratskammer von seiten der Portionierungskammer aus an. Gleichzeitig verschließt das Verschlußteil die Durchgangsöffnung von der Vorratskammer zu der Portionierungskammer durch ein deckelartiges Aufliegen auf der horizontal ausgebildeten Durchgangsöffnung. Beim Öffnen des Verschlußteils wird die angeformte Zwischenwand von der Trennwand zwischen der Vorratskammer und der Portionierungskammer abgebogen. Gleichzeitig verändert sich hierdurch die Geometrie der Portionierungskammer und der Ausgabekammer, da eben die Zwischenwand diese beiden Kammern trennt. Je nach Öffnungsstellung des Verschlußteils ist die Portionierungskammer größer oder kleiner. Das deckelartige Aufliegen des Verschlußteils auf der Durchgangsöffnung von der Vorratskammer zu der Portionierungskammer führt auch zu einem unterschiedlichen Öffnungsgrad in Abhängigkeit von der Stellung des Verschlußteils. Wesentlich ist aber auch, daß insbesondere bei körnigen Medien sich diese zwischen die aneinander entlangbewegten Teile setzen können und so zu einem Verschleißangriff und zur Undichtigkeit führen. Die Zwischenwand zwischen der Portionierungskammer und der Ausgabekammer liegt im Verschlußzustand nicht nur stirnseitig auf der Trennwand zwischen der Vorratskammer und der Portionierungskammer portionierungskammerseitig auf, sondern mit ihren Seitenflächen muß sie auch, um die notwendige Abtrennung zwischen der Portionierungskammer und der Ausgabekammer zu erreichen, an seitlichen Begrenzungswänden der Portionierungskammer bzw. der Ausgabekammer geführt sein. In Anbetracht der bspw. bei Kunststoff-Spritzgußteilen erreichenbaren Toleranzen und der feinen Körner, die bei körnigen Medien, auch mit im Mittel größerem Korn, fast immer in größerem oder kleinerem Anteil vorhanden sind, kann es hier zu einem Eindringen von solchem Medium zwischen die aneinander entlangbewegten Teile kommen. Die Gebrauchseigenschaften werden hierdurch nachteilig beeinflußt.

Ausgehend von dem vorbeschriebenen Stand der Technik stellt sich der Erfindung die Aufgabe, einen Spender für insbesondere pulverförmige bzw. körnige Massen anzugeben, der bei einfacher Herstellbarkeit eine gebrauchsgünstigere Handhabung ermöglicht.

Diese Aufgabe ist zunächst und im wesentlichen bei der im Anspruch 1 angegebenen Erfindung gelöst.

Erfindungsgemäß ist vorgesehen, daß die Zwischenwand feststehend ausgebildet ist und daß an dem Verschlußteil ein Sperrteil ausgebildet ist, zur Sperrung der Durchgangsöffnung von der Vorratskammer zu der Portionierungskammer in dem Verschlußzustand, welches Sperrteil im Zuge einer Schließbewegung des Verschlußteils in die Portionierungskammer einfahrbar ist. Erfindungsgemäß sind also die Begrenzungswände der jeweiligen Kammern feststehend ausgebildet. Durch eine Öffnung oder Schließung des Verschlußteiles werden die Kammern in ihrer Geometrie nicht verändert. Das Sperrteil wird durch eine der Kammern, die Portionierungskammer, hindurchbewegt, um im Verschlußzustand die Durchgangsöffnung zwischen der Vorratskammer und der Portionierungskammer abzudecken bzw. zu verschließen. Durch die feststehende Ausbildung der Zwischenwand und auch der Trennwand zwischen der Vorratskammer und der Portionierungskammer kann sich keine Masse oder kein körniges Material mehr zwischen seitliche Ränder der Trennwand bzw. der Zwischenwand und zugeordnete Umgebungswände setzen. Auch im Hinblick auf eine Anwendung mit Flüssigkeiten läßt sich eine erheblich verbesserte Dichtigkeit erzielen. Das Sperrteil kann so ausgebildet sein, daß es mit Abstand zu seitlichen Begrenzungswänden, und auch ggf. mit Abstand zu der Zwischenwand oder der Trennwand in die Portionierungskammer einfährt. Bezüglich der Absperrung der Durchgangsöffnung kann ein im wesentlichen stirnflächiges Aufliegen auf einem Öffnungsrand der Durchgangsöffnung ausgebildet sein.

Auch hierdurch läßt sich eine hohe Verschlußdichtigkeit wie auch ein geringer Reibungsangriff (Verschleißangriff) erzielen. Die Durchgangsöffnung muß nicht notwendig in ihrer seitlichen Erstreckung bis zu den jeweiligen seitlichen Begrenzungswänden durchgezogen sein. In der Ausgestaltung der Erfindung ist vorgesehen, daß das Sperrteil durch einen Abschnitt der Trennwand geführt ist. Dies ist eine alternative Ausführungsform zu einem vollkommen freien Durchtritt des Sperrteils durch die Öffnung in einer Decke der Portionierungskammer. Jedoch kann der Abschnitt der Trennwand, der das Sperrteil führt, auch mit Abstand zu einer Decke der Portionierungskammer erst in Anlage an das Sperrteil kommen. Die Erfindung schlägt in diesem Zusammenhang auch vor, daß das Sperrteil im Bereich der Öffnung in der Decke der Portionierungskammer mit seitlichem Abstand zu der Trennwand und/oder der Zwischenwand angeordnet ist. Auch ggf. mit seitlichem Abstand zu seitlichen Begrenzungswänden. Es kann auch vorgesehen sein, daß das Sperrteil zugleich im Verschlußzustand einen lichten Querschnitt der Portionierungskammer verschließt. Die Portionierungskammer also im Verschlußzustand verkleinert. Weiterhin ist bevorzugt vorgesehen, daß das Sperrteil rastend verschiebbar ist. Dies ermöglicht es, das Sperrteil und das damit verbundene Verschlußteil in verschiedenen Stellungen einzustellen. Hierbei ist auch bevorzugt, daß das Verschlußteil mit dem angeformten Sperrteil eine Neigung hat, bei einem Öffnen des Verschlußteils sogleich in eine definierte Öffnungsstellung zu gehen, so daß immer ein freies Auskippen oder Ausgießen möglich ist. Diese Neigung kann bspw. spritztechnisch dadurch erzielt werden, daß das an die Kammern angeformte Verschlußteil im Öffnungszustand angespritzt ist. Beim Schließen des Verschlußteils wird entsprechend eine Vorspannung in dem Verschlußteil aufgebaut, die dieses in die Öffnungsstellung zu bewegen sucht. Eine einteilige Ausbildung des Verschlußdeckels mit den Kammern erweist sich hierfür als vorteilhaft. In weiterer Ausgestaltung schlägt die Erfindung vor, daß in die Vorratskammer hineinragend eine entgegen einer Schüttrichtung sich öffnende Leitwand ausgebildet ist, die zu der Durchgangsöffnung hinführend eine trichterartige Verjüngung schafft. Bei einem ersten Umkippen des Spenders wird die Masse oder eine Flüssigkeit durch die Leitwand zu der Durchgangsöffnung trichterartig hingeführt und fließt bzw. strömt sodann durch die Durchgangsöffnung in die Portierungskammer. Hierbei ist die Leitwand weiter bevorzugt derart ausgebildet, daß bei einer Projizierung in Schüttrichtung die Leitwand nur einen Teil der Deckenfläche der Vorratskammer überdeckt. Es lastet also bei einem Kippvorgang nicht der gesamte Vorrat auf der durch die Durchgangsöffnung in die Portionierungskammer strömenden Masse. Dadurch, daß die Leitwand aber die Trennwand überdeckend ausgebildet ist und durch die Ausgabeöffnung eine definierte Schütthaltung des Spenders angezeigt ist, wird gleichwohl ohne Schwierigkeiten eine restlose Ausgabe der bspw. körnigen Masse erreicht. Der Spender in der vorbeschriebenen Form kann unmittelbar als Kopf an einen Vorratsbehälter, eine Flasche d. dergl. angeformt oder untrennbar mit dieser verbunden sein. Bevorzugt ist jedoch, daß der Spender als Aufsatzteil für einen Vorratsbehälter ausgebildet ist. Bspw. durch eine Clips- oder Schraubverbindung kann ein solcher Spender mit einem Vorratsbehälter verbunden werden. Hierbei wird ganz oder zu einem großen Teil die Vorratskammer durch den Vorratsbehälter gebildet.

Nachstehend wird die Erfindung desweiteren anhand der beigefügten Zeichnung, die jedoch lediglich Ausführungsbeispiele darstellt, erläutert. Hierbei zeigt:

Fig. 1    einen Spender einer ersten Ausführungsform, geschlossen;

Fig. 2    den Spender gemäß Fig. 1 in der Draufsicht;

Fig. 3    den Spender gemäß Fig. 1 in einer Öffnungsstellung;

Fig. 4    den Spender gemaß Fig. 1 in einer Ausgabestellung;

Fig. 5    einen Spender einer weiteren Ausführungsform, in geschlossener Stellung;

Fig. 6    den Spender gemäß Fig. 5 in einer Draufsicht;

Fig. 6a    eine Darstellung gemäß Fig. 6, mit einem als gesondertes Teil gefertigten Verschlußteil,

Fig. 7    den Spender gemäß Fig. 5 in einer ersten Öffnungsstellung;

Fig. 7a    eine Darstellung gemäß Fig. 7, mit einem als gesondertes Teil gefertigten Verschlußteil,

Fig. 8    den Spender gemäß Fig. 5, geöffnet gemäß Fig. 7 in einer Ausgabestellung;

Fig. 8a    eine Darstellung gemäß Fig. 8, mit einem als gesondertes Teil gefertigten Verschlußteil,

Fig. 9    den Spender gemäß Fig. 5 in einer zweiten Öffnungsstellung;

Fig. 10    den Spender gemäß Fig. 5, geöffnet gemäß Fig. 9, in einer Ausgabestellung;

Fig. 11    einen Spender einer weiteren Ausführungsform in einer Schließstellung;

Fig. 12    eine Draufsicht auf den Spender gemäß Fig. 11;

Fig. 13    den Spender gemäß Fig. 11 in einer Öffnungsstellung und

Fig. 14 den Spender gemäß Fig. 11 in der Ausgabestellung.

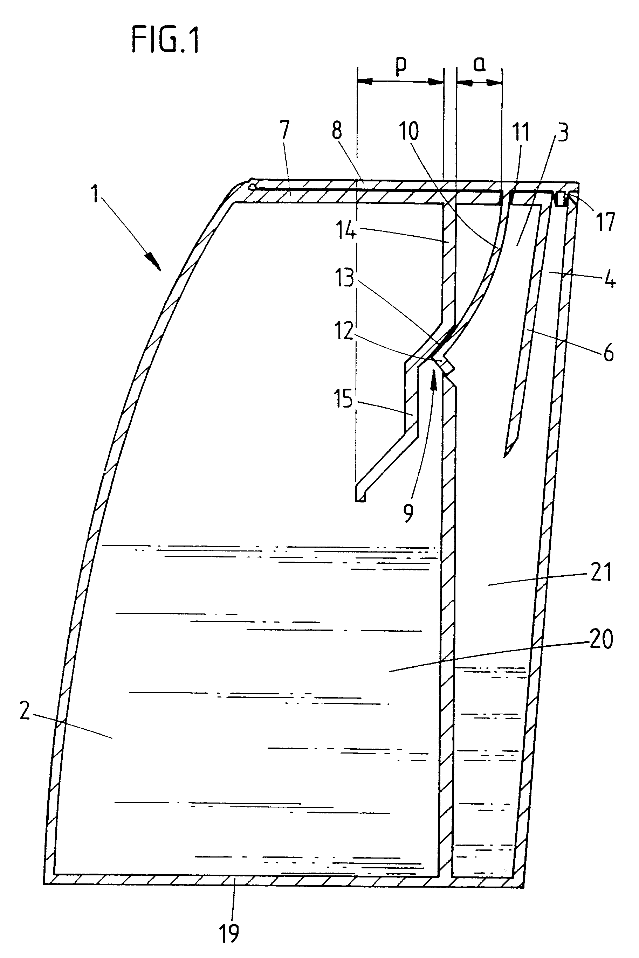

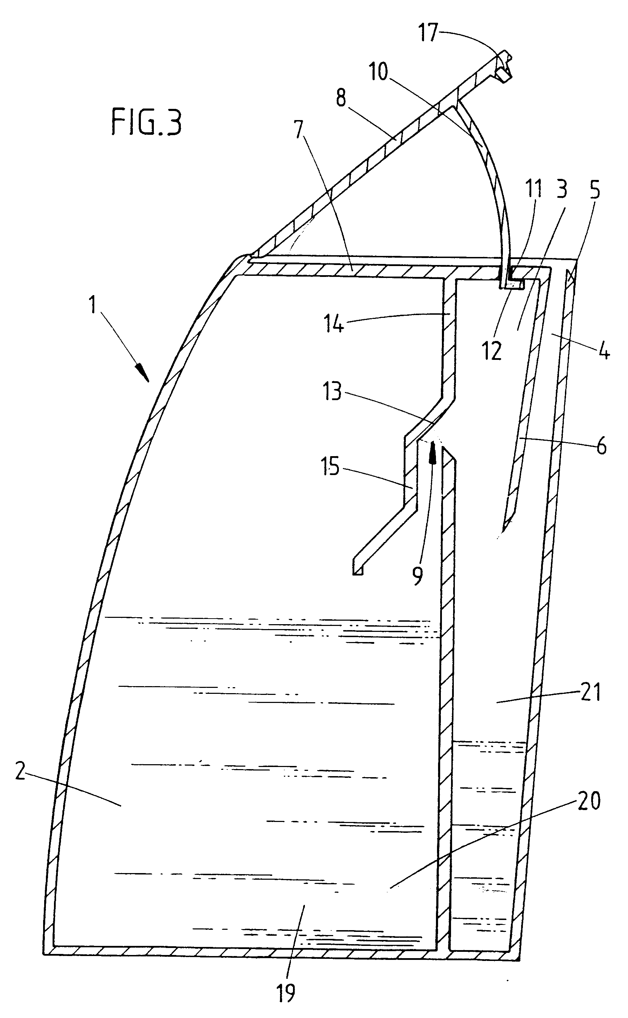

Dargestellt und beschrieben ist, zunächst mit Bezug zu den Fig. 1, 5 und 11, ein Spender 1 für insbesondere pulverförmige bzw. körnige Massen, mit einer Vorratskammer 2, einer Portionierungskammer 3 und einer Ausgabekammer 4. Die Ausgabekammer 4 besitzt eine Ausgabeöffnung 5 (vergl. bspw. Fig. 3). Die Ausgabekammer 4 ist weiter durch eine Zwischenwand 6 von der Portionierungskammer 3 getrennt. Die Zwischenwand 6 ist an eine Decke 7 des Spenders 1 angeformt.

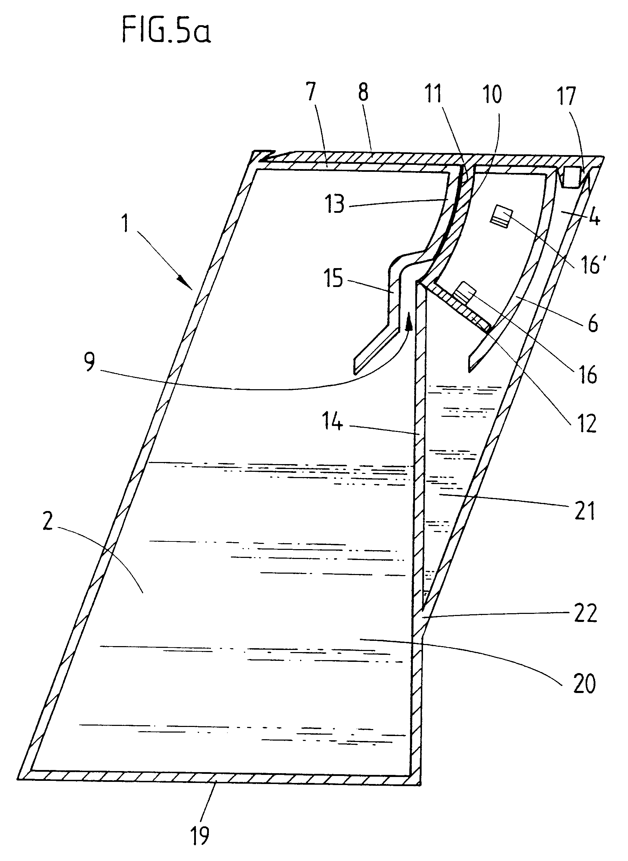

Der Spender 1 besitzt weiter ein Verschlußteil 8, das im Verschlußzustand sowohl eine Durchgangsöffnung 9 von der Vorratskammer 2 zu der Portionierungskammer 3, wie auch die Ausgabeöffnung 5 verschließt. Im einzelnen ist hierzu an dem deckelartigen Verschlußteil 8 ein Sperrteil 10 ausgebildet, das durch die Decke 7, dort eine Öffnung 11, geführt ist und von der Portionierungskammer 3 aus an der Durchgangsöffnung 9 absperrend aufliegt. Das Sperrteil 10 fährt von oben, innenseitig an der Decke 7 anliegend, aus einer Öffnungsstellung etwa gemäß Fig. 3, im Zuge einer Schließbewegung des Verschlußteils 8 in die Portionierungskammer 3 ein, bis ein Sperrabschnitt 12 verschließend auf der Durchgangsöffnung aufliegt. Das Sperrteil 10 ist bei einigen Ausführungsformen durch einen Abschnitt 13 einer Trennwand 14 bzw. einer Leitwand 15 geführt. Bei der Ausführungsform gemäß Fig. 1 ist der Abschnitt 13 im Bereich der Leitwand 15 ausgebildet. Er ist unmittelbar der Durchgangsöffnung 9 benachbart bzw. führt bis zu dieser hin. Das Sperrteil 10 wird erst etwa auf einem letzten Viertel seiner Bewegung in den Verschlußzustand durch den Abschnitt 13 geführt. Wie ersichtlich, ist das Sperrteil 10 kreisbogenabschnittsförmig im Querschnitt ausgebildet. Formmäßig hieran angepaßt ist der Abschnitt 13. Bei der Ausführungsform gemäß Fig. 5 ist der Abschnitt 13 durch den oberen Teil der Trennwand 14 gebildet. Das Sperrteil 10 wird hier auf seiner gesamten Bewegung in die Schließstellung durch den Abschnitt 13 geführt. Bei der Ausführungsform gemäß Fig. 5 ist das Sperrteil 10 mit einem Sperrabschnitt 12 ausgebildet, der stirnseitig ständig an der Zwischenwand 6 anliegt. Bei dieser Ausführungsform ist sowohl die Zwischenwand 6 wie auch der Abschnitt 13 und die entsprechende Wand des Sperrteils 10 selbst jeweils im Querschnitt kreisbogenabschnittsförmig geformt. Bei der Ausführungsform gemäß Fig. 5 liegt das Sperrteil 10 auch im Verschlußzustand etwa über drei Viertel seiner Länge an dem Abschnitt 13 an.

Montagetechnisch kann so vorgegangen werden, daß die Öffnung 11 und die Flexibilität des Sperrabschnittes 12 so gewählt bzw. so getroffen ist, daß der Sperrabschnitt 12 unter Verformung durch die Öffnung 11 hindurchgedrückt werden kann. Alternativ kann das Verschlußteil 8 auch als gesondertes Teil gefertigt werden und sodann von der Seite eingesetzt werden. Dies ist jeweils in den Fig. 5a, 6a, 7a, 8a dargestellt. Aus einem Vergleich der Fig. 5 und 5a usw. ist ersichtlich, daß am scharnierseitlichen Ende jeweils ein Überstand ausgebildet ist, unter welchen das Verschlußteil untergreift. Der Überstand wirkt als Scharnierwiderlager.

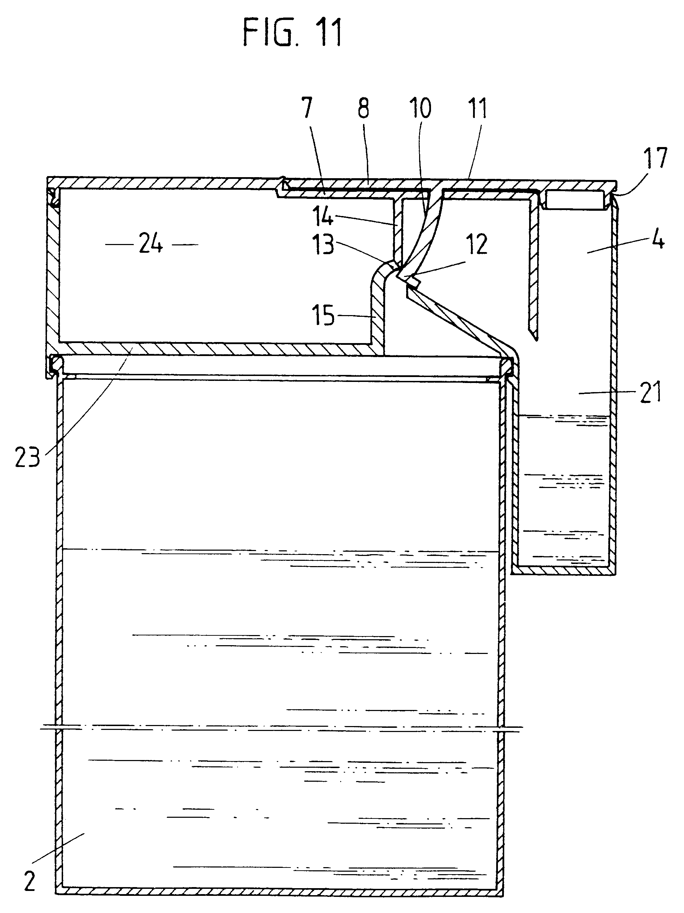

Bei der Ausführungsform gemäß Fig. 11 ist der Abschnitt 13 lediglich nur durch eine Ecke zwischen der Leitwand 15 und der Trennwand 14 gebildet. Das Sperrteil 10 wird im Verschlußzustand nur gleichsam punktuell durch den Abschnitt 13 gestützt.

Bei den Ausführungsformen gemäß Fig. 1 und 11 ist das Sperrteil 10 jeweils mit einem seitlichen Abstand a, im Bereich der Decke 7, zu der Trennwand 14 angeordnet.

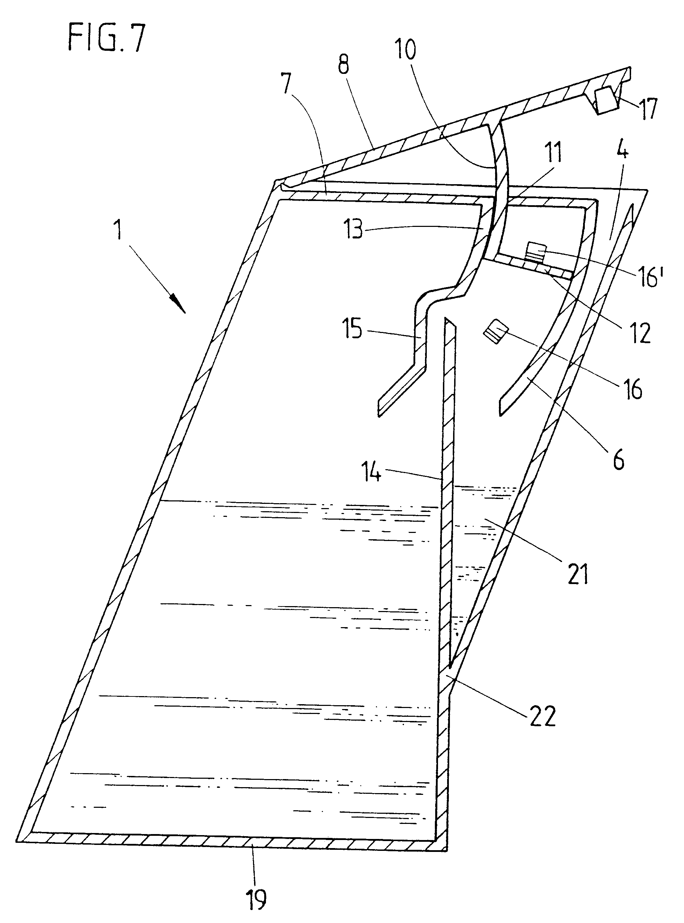

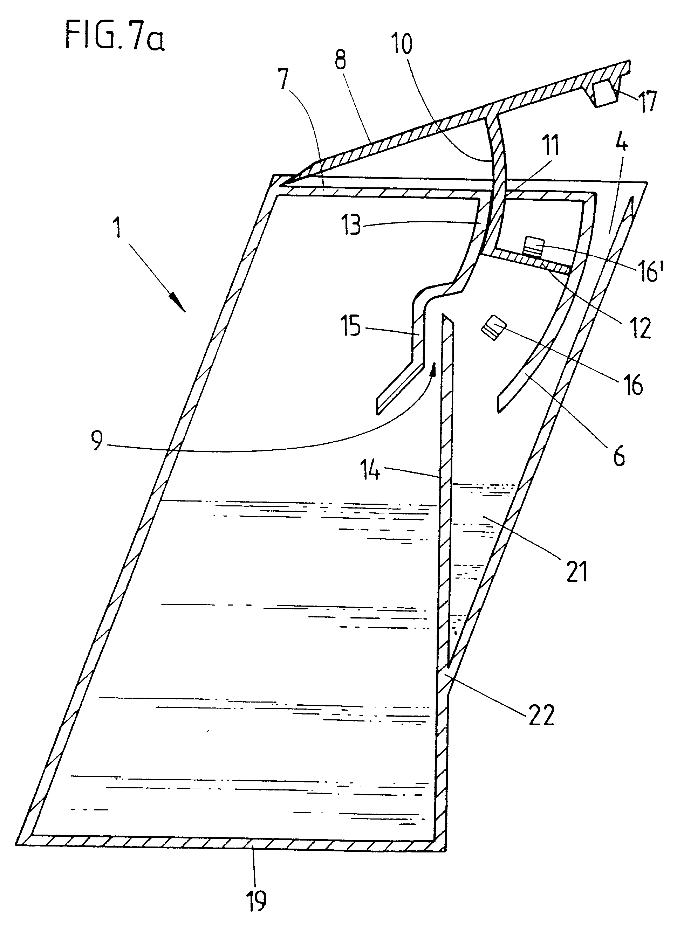

Bei der Ausführungsform gemäß Fig. 5 sind seitliche (stirnseitige) Rastnocken 16, 17 vorgesehen, die eine definierte Verschlußstellung und eine definierte erste Öffnungsstellung (Fig. 7) ermöglichen.

Wie bei allen Ausführungsformen bevorzugt vorgesehen, ist auch bei der Ausführungsform gemäß Fig. 5 das Verschlußteil 8 einteilig mit den Kammern bzw. den diese bildenden Wänden ausgebildet. Bevorzugt ist der Spender 1 als Kunststoffspritzgußteil gefertigt. Bezüglich des Verschlußteils 8 wird hierbei so vorgegangen, daß dieses im Öffnungszustand gespritzt wird, so daß das Verschlußteil 8 ständig eine Neigung hat, sich zu öffnen. Der definierte Verschlußzustand wird durch den Raststopfen 17 am vorderen Ende des Verschlußteils 8 zum Verschluß der Ausgabeöffnung 5 erreicht. Nachdem der Verschlußstopfen 17 aus der Öffnung 5 herausgefahren ist, stellt sich bevorzugt das Verschlußteil 8 in eine Öffnungsstellung, wie bspw. in Fig. 3 dargestellt. Bei der Ausführungsform gemäß Fig. 5 ist zu einer Öffnung des Verschlußteiles 8 zunächst der seitliche Rastnocken zu überlaufen. Aufgrund der fertigungstechnisch eingestellten Vorspannung in die Öffnungsstellung fährt das Verschlußteil 8 bzw. genauer der Sperrabschnitt 12 des Sperrteils 10 gegen den Rastnocken 17. Erst bei einem weiteren willensbetonten Öffnen des Verschlußteiles 8 wird auch der Rastnocken 17 überlaufen.

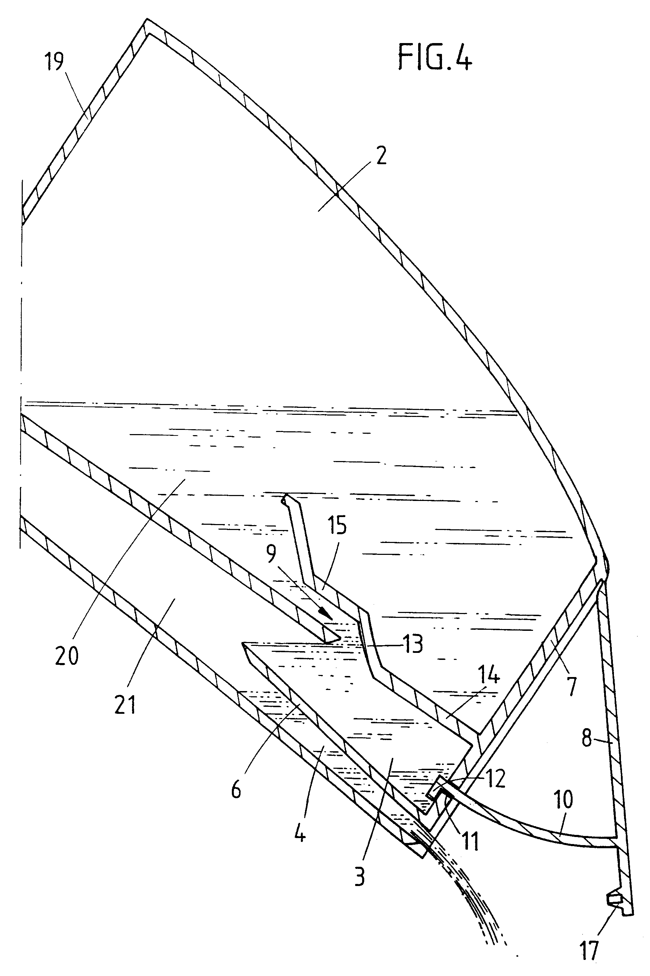

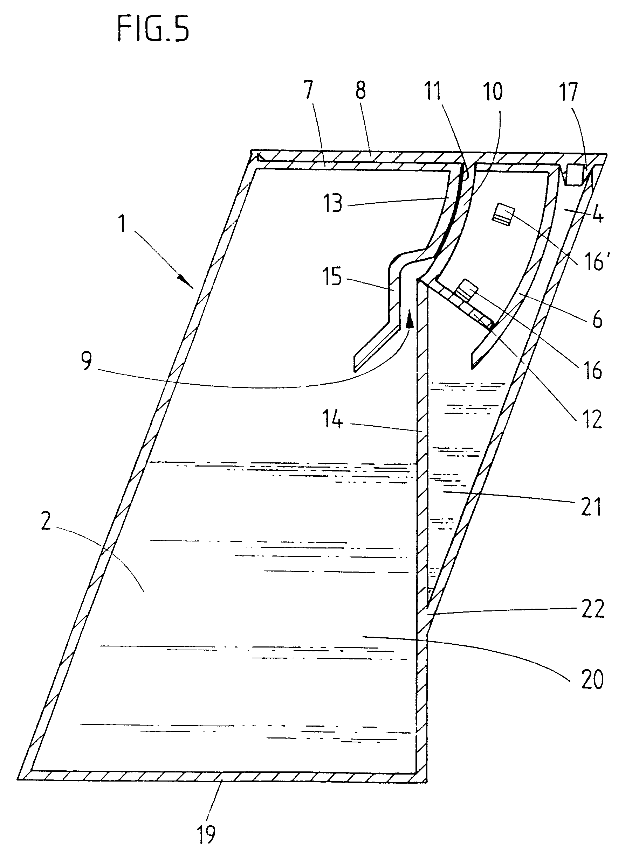

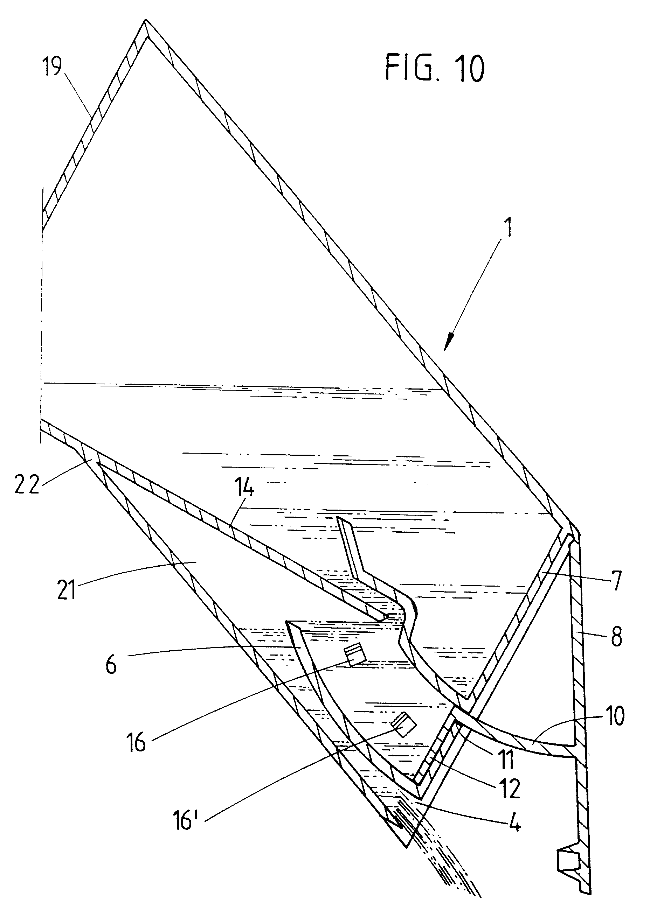

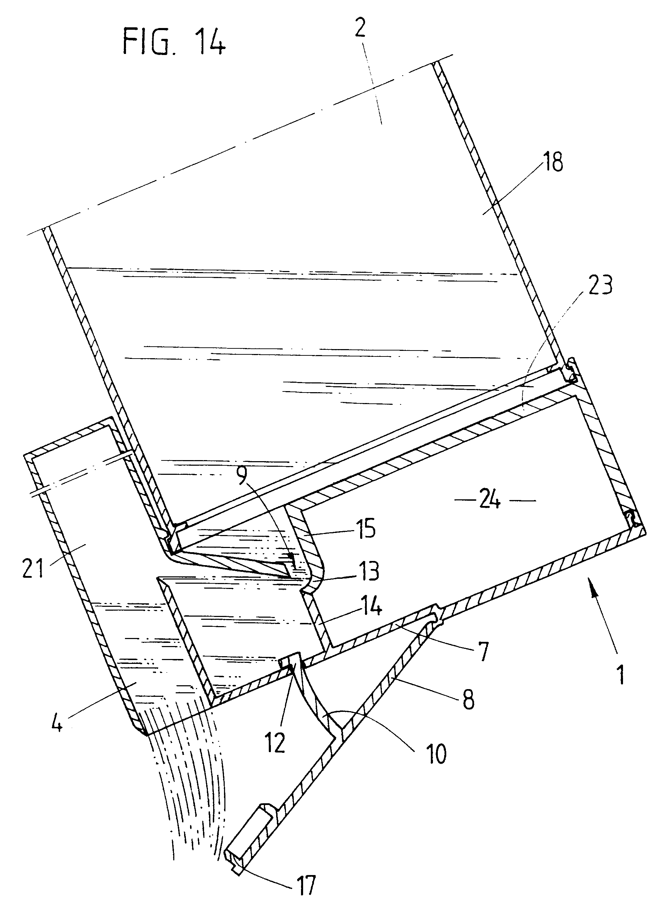

Bei den Ausführungsformen insbesondere gemäß Fig. 1 und Fig. 5, aber auch bei der Ausführungsform gemäß Fig. 11, ist in die Vorratskammer 2 hineinragend eine entgegen einer Schüttrichtung (vergl. bspw. Fig. 4, 8, 10 und 14) sich öffnende Leitwand 15 ausgebildet, die zu der Durchgangsöffnung 9 hinführend, eine trichterartige Verjüngung schafft. Das bspw. pulverförmige Material wird durch die Leitwand 15 bei einem Umkippen zu der Durchgangsöffnung 9 hingeleitet.

Im einzelnen ist die Ausgestaltung bei den Ausführungsformen gemäß den Fig. 1 und 5 so vorgesehen, daß die Leitwand 15 in Schüttrichtung bei einer Projizierung auf die Deckenfläche 7 der Vorratskammer 2 nur einen Teil derselben (Abschnitt p in Fig. 1) überdeckt. Bei einem Umkippen des Spenders 1, wie bspw. in Fig. 4 dargestellt, lastet nicht die gesamte Masse in der Vorratskammer 2 auf der durch die Leitwand 15 gehaltenen, vor der Durchgangsöffnung 9 anstehenden Masse.

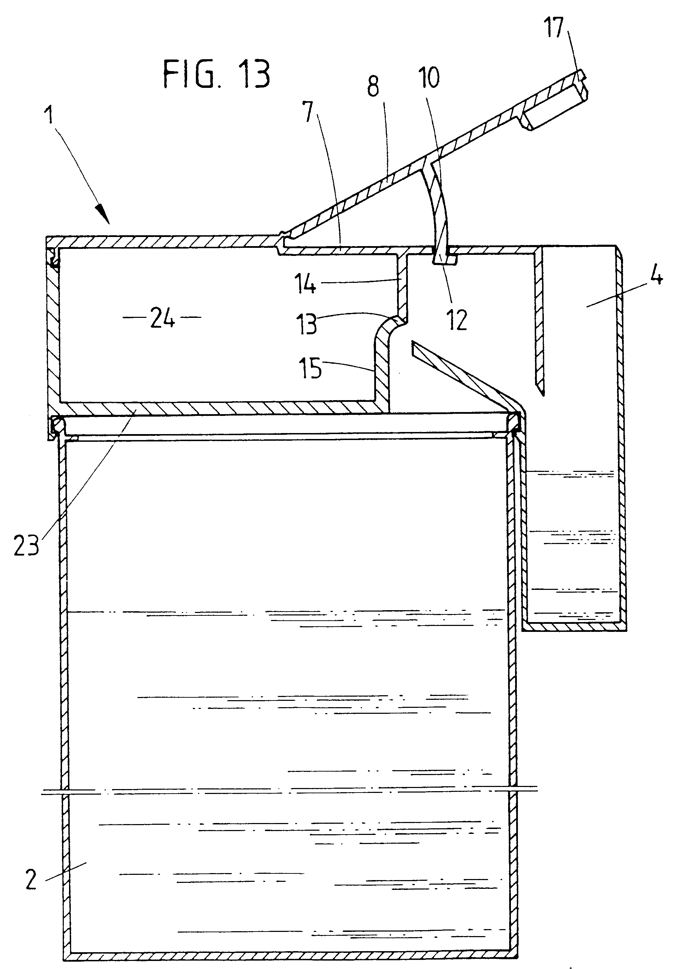

Wie insbesondere bspw. aus den Fig. 11 - 14 ersichtlich ist, kann der Spender 1 auch als Aufsatzteil für einen Vorratsbehälter 18 ausgebildet sein. Hierbei ist die Vorratskammer 2 im wesentlichen durch den Vorratsbehälter 18 ersetzt.

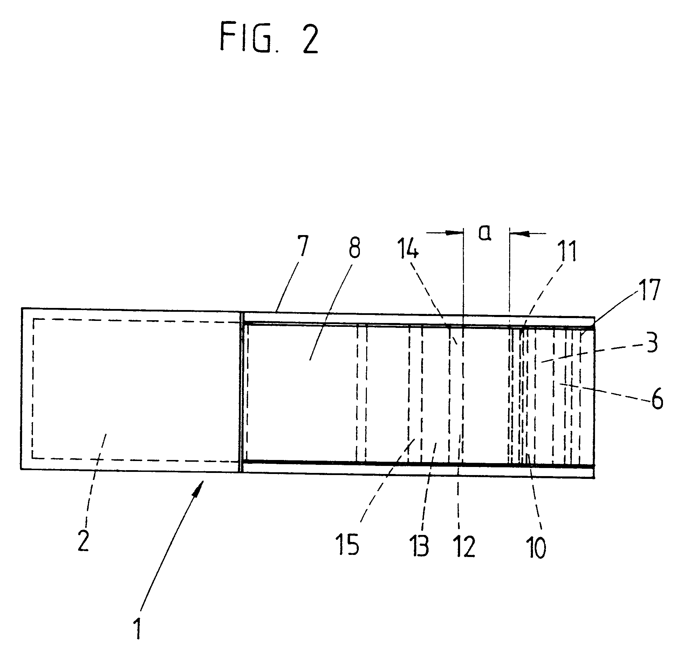

Bei der Ausführungsform gemäß Fig. 1 ist die Portionierungskammer 3 und die Ausgabekammer 4 bis zu einer Bodenwand 19 nach unten durchgezogen, welche auch die Vorratskammer 2 begrenzt. Die Zwischenwand 6 ist von der Decke 7 ausgehend frei hineinragend (stirnseitig) in die im unteren Teil ineinander übergehenden Kammern, die Portionierungskammer 3 und die Ausgabekammer 4, ausgebildet. Wie sich aus der Draufsicht gemäß Fig. 2 ergibt, ist der die Portionierungskammer 3 und die Ausgabekammer 4 ausbildende Bereich insgesamt spitzwinklig geformt. Das Verschlußteil 8 besitzt eine angepaßte Formung. Dagegen ist die Vorratskammer 2 im Grundriß im wesentlichen kreisförmig ausgebildet.

Mit Bezug zu den Fig. 4, 8, 10 und 18 soll, ausgehend von den Fig. 3, 7, 9 und 13 die Funktionsweise eines Spenders 1 erläutert werden. Nach Öffnen des Verschlußteiles 8 wird bei einer erstmaligen Benutzung (in den Fig. 3 etc. ist der Zustand nach einer erstmaligen Benutzung dargestellt) der Spender 1 umgekippt. Pulverförmige Masse o. dgl. 20 strömt aus der Vorratskammer 2, also durch die Durchgangsöffnung 9 in die Portionierungskammer 3. Der Spender 1 wird sodann wieder in seine normale Lage zurückgeschwenkt. Die Masse 20 strömt von der Portionierungskammer 3 in einen Auffangraum 21, der gleichsam von der Portionierungskammer 3 und der Ausgabekammer 4 gemeinsam genutzt wird. Durch ein weiteres Umkippen wird die Masse 20 sodann durch die Ausgabeöffnung 5 zur Ausgabe gebracht. Es kann nur die in dem Auffangraum 21 zuvor befindliche Masse austreten. Die gleichzeitig nachströmende Masse in die Portionierungskammer 3 ist durch die Zwischenwand 6 an einem Austritt ohne ein weiteres Umkippen gehindert.

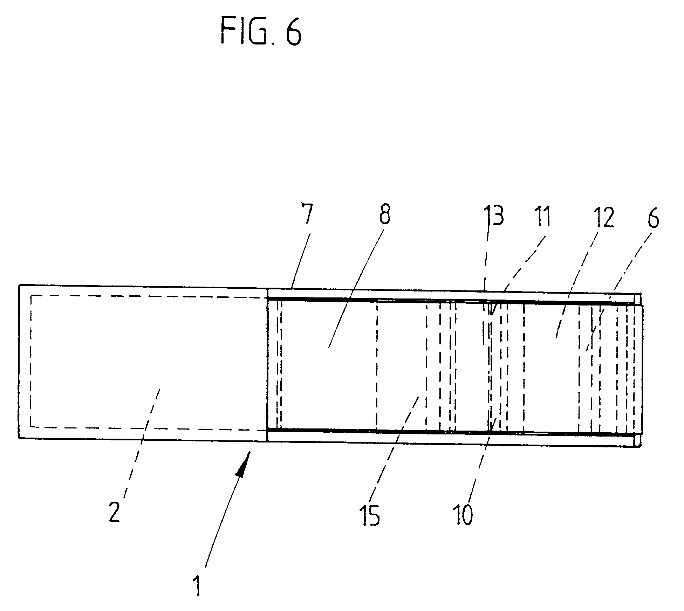

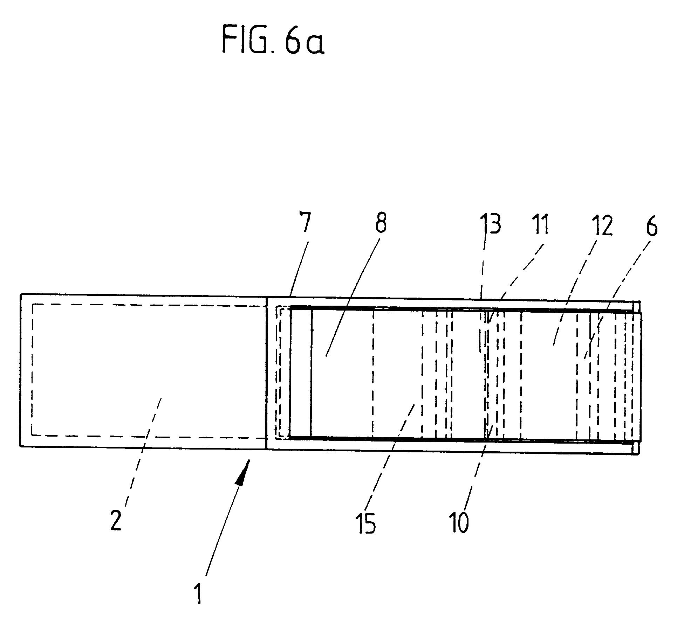

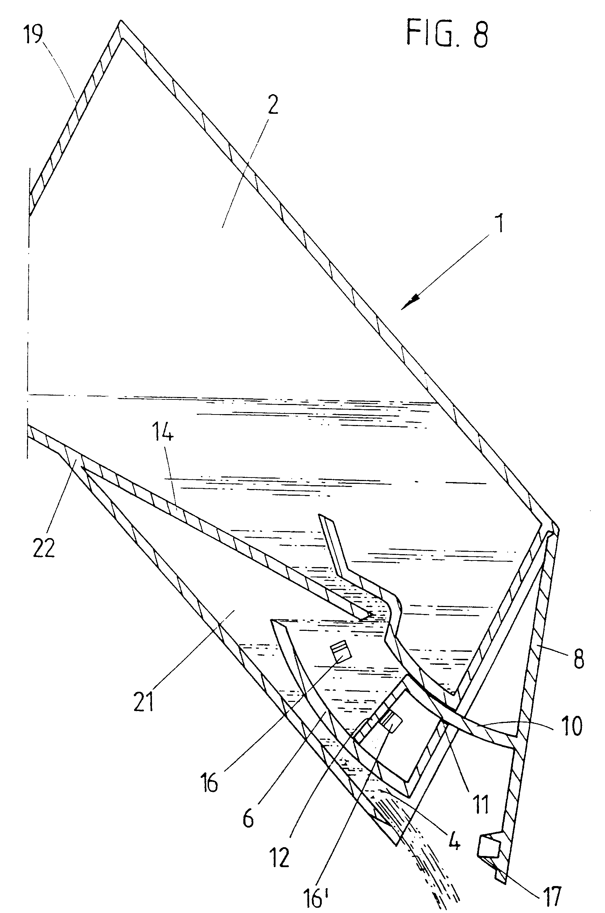

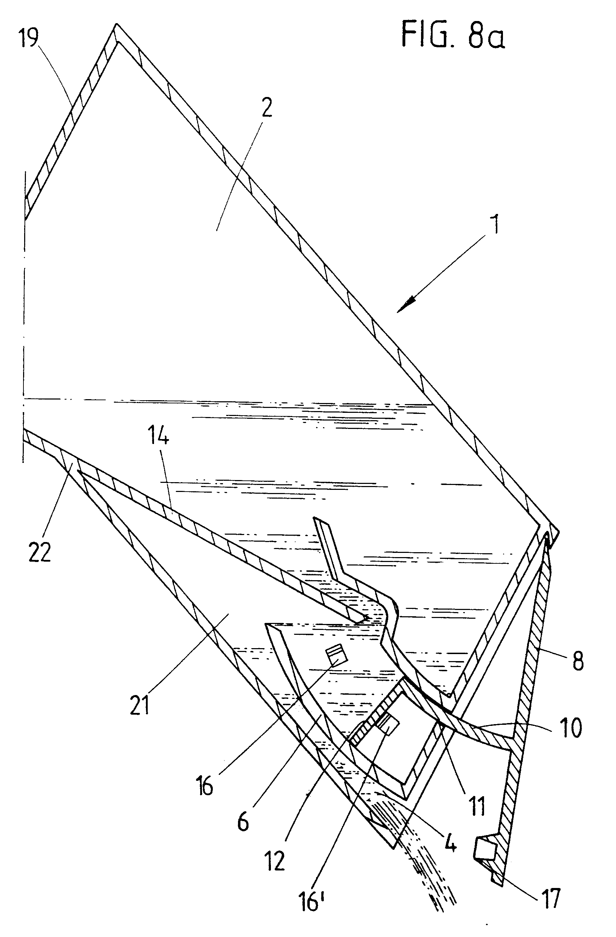

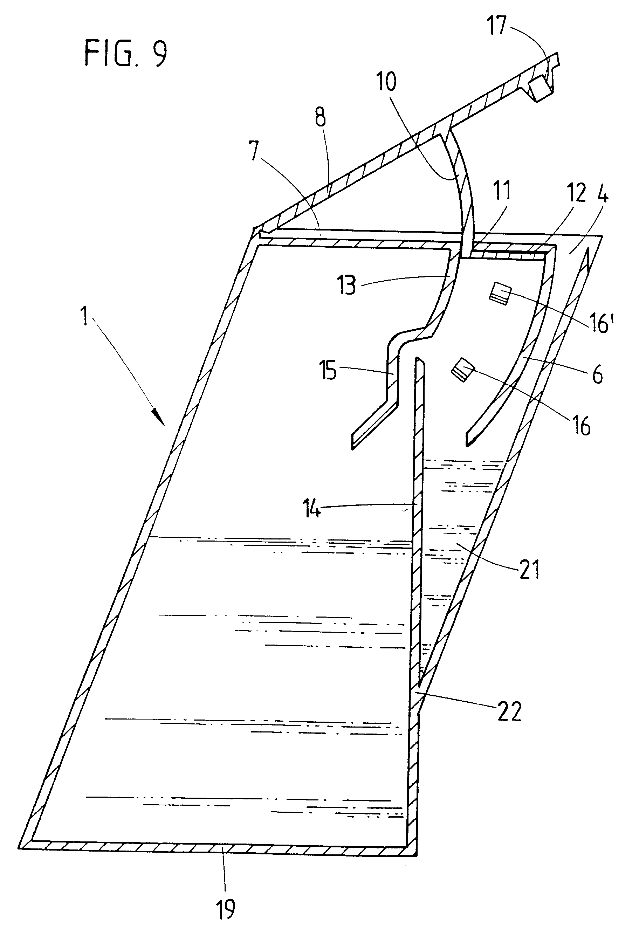

Bei der Ausführungsform gemäß Fig. 5 ist der Auffangraum 21 nicht bis zu der Bodenfläche 19 durchgehend ausgebildet. Vielmehr endet der Auffangraum 21 bei 22 oberhalb der Bodenfläche 19. Wie sich auch aus der Draufsicht gemäß Fig. 6 ergibt, ist diese Ausführungsform besonders für ein schnutenartiges Vorstehen der Portionierungskammer 3 und der Ausgabekammer 4 geeignet. Bezüglich dieser Ausführungsform ist aus den Fig. 8 und 9 auch ersichtlich, daß sich unabhängig von der vollen oder einer Teilöffnungsstellung des Verschlußteiles 8 jeweils eine ungehinderte Durchtrittsmöglichkeit durch die Durchgangsöffnung 9 und eine Ausgabemöglichkeit durch die Ausgabeöffnung 5 für die Masse ergibt. Gleichwohl kann aber die Portionierung durch das gegen Nocken 16, 17 verschiebliche Verschlußteil 8 wahlweise eingestellt werden.

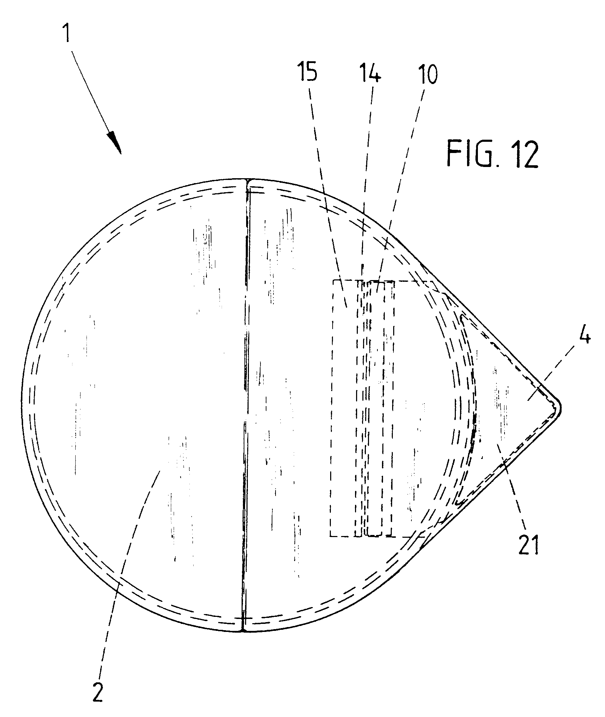

Bei der Ausführungsform gemäß Fig. 11 geht die Leitwand 15 in eine Decke 23 über, so daß sich oberhalb der Decke 23 ein nicht genutzter Raum 24 ergibt. Grundsätzlich kann der Spender 1 in diesem Bereich auch abgestuft ausgebildet sein. Aus der Draufsicht gemäß Fig. 12 ist ersichtlich, daß auch bei dieser Ausführungsform die Vorratskammer 2 und der diesem Bereich zugeordnete obere Teil des Spenders 1 bevorzugt kreisförmigen Querschnitt aufweist, während die Ausgabekammer 4 und bei dieser Ausführungsform im wesentlichen nur die Ausgabekammer 4, zusammen mit dem Auffangraum 21, einen spitzwinkligen Bereich ausbilden.

Die Figuren 2 und 6 zeigen, daß die Ausführungsformen gemäß Fig. 1 bis 10 in der Draufsicht einen bevorzugt rechteckigen Querschnitt besitzen. Fig. 12 zeigt dagegen bzgl. der Ausführungsformen nach Fig. 11 bis 14, daß diese in der Draufsicht einen im wesentlichen kreisförmigen Querschnitt besitzen, mit einseitig spitzwinkligem Zusatz.

Die in der vorstehenden Beschreibung, der Zeichnung und den Ansprüchen offenbarten Merkmale der Erfindung können sowohl einzeln als auch in beliebiger Kombination für die Verwirklichung der Erfindung von Bedeutung sein.

**Patentansprüche**

1. Spender (1) für insbesondere pulverförmige bzw. körnige Massen, mit einer Vorratskammer (2), einer Portionierungskammer (3) und einer Ausgabekammer (4) mit einer Ausgabeöffnung (5), welche Ausgabekammer (4) durch eine Zwischenwand (6) von der Portionierungskammer (3) getrennt ist, wobei durch ein erstmaliges Umkippen die Masse (20) in die Portionierungskammer (3) gelangt und von dort beim Zurückkippen in die Ausgabekammer (4), und beim zweiten Umkippen die portionierte Masse (20) ausgegeben wird, weiter mit einem Verschlußteil (8), das im Verschlußzustand sowohl eine Durchgangsöffnung (9) von der Vorratskammer (2) zu der Portionierungskammer (3) als auch die Ausgabeöffnung (5) verschließt, dadurch gekennzeichnet, daß die Zwischenwand (6) feststehend ausgebildet ist und daß an dem Verschlußteil (8) ein Sperrteil (10) ausgebildet ist, zur Sperrung der Durchgangsöffnung (9) von der Vorratskammer (2) zu der Portionierungskammer (3) in dem Verschlußzustand, welches Sperrteil (10) im Zuge einer Schließbewegung des Verschlußteils (8) durch eine Öffnung (11) in einer Decke (7) der Portionierungskammer (3) verschiebbar ist.

2. Spender (1) für insbesondere pulverförmige bzw. körnige Massen, insbesondere nach Anspruch 1, dadurch gekennzeichnet, daß das Sperrteil, (10) durch einen Abschnitt (13) einer Trennwand (14) zwischen der Vorratskammer (2) und der Portionierungskammer (3) geführt ist.

3. Spender (1) für insbesondere pulverförmige bzw. körnige Massen, insbesondere nach einem der vorhergehenden Ansprüche, dadurch gekennzeichnet, daß das Sperrteil (10>) im Bereich der Öffnung (11) in der Decke (7) der Portionierungskammer (3) mit seitlichem Abstand (a) zu der Trennwand (14) angeordnet ist.

4. Spender (1) für insbesondere pulverförmige bzw. körnige Massen, insbesondere nach einem oder mehreren der vorhergehenden Ansprüche, dadurch gekennzeichnet, daß das Sperrteil (10) zugleich im Verschlußzustand einen lichten Querschnitt der Portionierungskammer (3) verschließt.

5. Spender (1) für insbesondere pulverförmige bzw. körnige Massen, insbesondere nach einem oder mehreren der vorhergehenden Ansprüche, dadurch gekennzeichnet, daß das Sperrteil (10) rastend verschiebbar ist.

6. Spender (1) für insbesondere pulverförmige bzw. körnige Massen, insbesondere nach einem oder mehreren der vorhergehenden Ansprüche, dadurch gekennzeichnet, daß das Verschlußteil (8) einteilig mit den Kammern (2,3,4) ausgebildet ist.

7. Spender (1) für insbesondere pulverförmige bzw. körnige Massen, insbesondere nach einem oder mehreren der vorhergehenden Ansprüche, dadurch gekennzeichnet, daß in die Vorratskammer (2) hineinragend eine entgegen einer Schüttrichtung sich öffnende Leitwand (15) ausgebildet ist, die zu der Durchgangsöffnung (9) eine trichterartige Verjüngung schafft.

8. Spender (1) für insbesondere pulverförmige bzw. körnige Massen, insbesondere nach einem oder mehreren der vorhergehenden Ansprüche, dadurch gekennzeichnet, daß bei einer Projizierung in Schüttrichtung die Leitwand (15) nur einen Teil (Abschnitt p) der Decke (7) der Vorratskammer (2) überdeckt.

9. Spender (1) für insbesondere pulverförmige bzw. körnige Massen, insbesondere nach einem oder mehreren der vorhergehenden Ansprüche, dadurch gekennzeichnet, daß der Spender (1) als Aufsatzteil für einen Vorratsbehälter (18) ausgebildet ist.

10. Spender (1) für insbesondere pulverförmige bzw. körnige Massen, insbesondere nach einem oder mehreren der vorhergehenden Ansprüche, dadurch gekennzeichnet, daß die Vorratskammer (2) durch den Vorratsbehälter (18) gebildet ist.

FIG.1

EP 0 492 534 A1

FIG. 2

FIG.3

FIG.4

# FIG.5

# FIG.5a

## FIG. 6

FIG. 6a

FIG.7

FIG.7a

FIG. 8

# FIG. 8a

FIG. 9

FIG. 10

# FIG. 11

FIG. 12

FIG. 13

FIG. 14

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-0 066 216 (MEGA) * claim 1; figure 1 * | 1 | B65D83/06 G01F11/28 |
| A | FR-A-1 336 874 (ROLLAND) * Zusammenfassung * * figures 1-4 * | 1 | |
| A | EP-A-0 079 549 (HENKEL) * claims 1-5; figure 1 * | 1 | |

TECHNICAL FIELDS SEARCHED (Int. Cl.5 )

B65D
G01F

The present search report has been drawn up for all claims

| Place of search | Date of completion of the search | Examiner |
|---|---|---|
| THE HAGUE | 24 APRIL 1992 | ANDEREGG P-Y. F. |